Europäisches Patentamt

European Patent Office

Office européen des brevets

(19)

(11) Veröffentlichungsnummer: **0 1 1 1 033 B1**

(12)

# EUROPÄISCHE PATENTSCHRIFT

(45) Veröffentlichungstag der Patentschrift:
**12.06.85**

(21) Anmeldenummer: **82201559.0**

(22) Anmeldetag: **08.12.82**

(51) Int. Cl.⁴: **C 04 B 7/36,** C 04 B 7/46,
B 01 D 45/04

(54) **Verfahren und Vorrichtung zur Herstellung von Zementklinker.**

(43) Veröffentlichungstag der Anmeldung:
**20.06.84 Patentblatt 84/25**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**EP - A - 0 026 921**
**DE - A - 2 221 726**
**DE - A - 2 460 726**
**GB - A - 1 055 993**
**GB - A - 2 059 289**

(73) Patentinhaber: **Verein Deutscher Zementwerke e. V.,
D-4000 Düsseldorf 30 (DE)**

(72) Erfinder: **Gardeik, Hans Otto, Dr.-Ing., Kuckelter Weg 21,
D-4023 Ratingen 4 (DE)**
Erfinder: **Rosemann, Holger, Dipl.-Ing.,
Kreitenstrasse 12, D-4000 Düsseldorf (DE)**

(74) Vertreter: **Ackmann, Günther, Dr.-Ing.,
Claubergstrasse 24 Postfach 10 09 22,
D-4100 Duisburg 1 (DE)**

ACTORUM AG

## Beschreibung

Die Erfindung betrifft ein Verfahren und eine Vorrichtung zur Herstellung von Zementklinker aus Zementrohmehl, welches in einem mehrstufigen Schwebegasvorwärmer vom Gasstrom eines Drehrohrofens vorgewärmt und anschliessend durch den Drehrohrofen geführt wird, wobei zur Verringerung unerwünschter, in den Brenn- und/oder Vorwärmstufen umlaufender flüchtiger Schadstoffe ein Teil des Gasstromes über einen Bypass geführt, bis zur Kondensation der darin enthaltenen flüchtigen Schadstoffe abgekühlt und nach Abscheidung der Kondensationsprodukte in den Schwebegasvorwärmer geleitet wird.

Verfahren und Vorrichtungen mit einem Bypass zur Verringerung des Chlorids im Brenngut und des Alkaligehaltes im Zementklinker sind sowohl bei Anlagen mit einem Rostvorwärmer wie auch bei solchen mit einem mehrstufigen Schwebegasvorwärmer bekannt. Um eine störende Ablagerung der unerwünschten Kondensationsprodukte, zu denen vor allem Alkaliverbindungen gehören, im Drehrohrofen und Rostvorwärmer sowie in dem der Abführung des mit Staub und den Kondensationsprodukten beladenen Teilgasstromes dienenden Bypass zu verhindern, soll nach der DE-A2 Nr. 2161410 der Teilgasstrom möglichst heiss entnommen und unmittelbar an der Abzweigstelle schnell abgeschreckt werden. Allen bekannten Bypassmethoden haftet jedoch der wesentliche Nachteil an, dass der dem Gasstrom des Drehrohrofens über den Bypass entnommene Teilgasstrom mit einem hohen Anteil anstaubförmigem Brenngut beladen ist. Insbesondere bei Anlagen mit einem Schwebegasvorwärmer wird ein hoher Staubanteil vom Gasstrom im Drehrohrofen mitgerissen und auch in den Bypass geleitet. Der im Bypass mitgeführte Staubanteil verursacht jedoch den Nachteil, dass sich die flüchtigen Schadstoffe, insbesondere die Alkalibestandteile beim Abkühlen bzw. Abschrecken des Teilgasstromes, im wesentlichen auf den Staubteilchen niederschlagen und mit diesen eine klebrige Substanz bilden, welche zum Anbacken in der Rohrleitung neigt. Um diese Schwierigkeiten zu verringern, wird deshalb in der DE-A2 Nr. 2161410 eine starke Abschreckung auf etwa 320° C vorgeschlagen; dieser Vorschlag hat aber den Nachteil, dass der stark abgekühlte Teilgasstrom wärmetechnisch für den Brennprozess im wesentlichen verloren ist. Ausserdem muss der mit den Alkalien angereicherte Staubanteil, dem bereits eine grössere Wärmemenge zugeführt wurde, verworfen werden.

Demgegenüber liegt der Erfindung die Aufgabe zugrunde, das Verfahren der gattungsgemässen Art derart fortzuentwickeln, dass die mit der Ausscheidung flüchtiger Schadstoffe nach der Bypassmethode verbundenen Wärmeverluste erheblich geringer werden und auch bei einem hohen Staubanteil im Gasstrom des Drehrohrofens eine wirtschaftliche Ausscheidung der flüchtigen Schadstoffe ohne Brenngutverlust ermöglicht wird.

Diese Aufgabe wird erfindungsgemäss dadurch gelöst, dass der mit den flüchtigen Schadstoffen und mit Brenngutstaub angereicherte Gasstrom des Drehrohrofens oder einer Stufe des Schwebegasvorwärmers durch einen diffusorartig ausgebildeten Rohrabschnitt derart geführt wird, dass die Staubteilchen den sich erweiternden Rohrabschnitt gebündelt durchströmen und eine von Staubteilchen freie Randzone gebildet wird, an welcher der Bypass abgezweigt wird.

Durch diese Gasführung werden die Staubteilchen so gelenkt, dass im Diffusorteil bzw. unmittelbar dahinter Bereiche verbleiben, in die keine oder nur sehr wenig Staubteilchen gelangen; an diese im wesentlichen staubfreien Bereiche ist der Bypass angeschlossen, so dass in den Bypass ein praktisch staubfreier Teilgasstrom gelangt, der die zu beseitigenden flüchtigen Schadstoffe anteilmässig enthält.

Die diffusorartige Gasführung reicht zur Bildung der staubfreien Randzonen aus, wenn die Gasgeschwindigkeit entsprechend gross ist; in der Regel genügt eine Gasgeschwindigkeit von 15 m/s. Ist die Gasgeschwindigkeit jedoch zu gering, um eine gebündelte Strömung der Staubteilchen im Diffusorteil sicherzustellen, dann kann der Gasstrom vor dem Einströmen in den diffusorartigen Rohrabschnitt durch einen düsenartigen Rohrabschnitt geführt und beschleunigt werden.

Vorzugsweise wird der abgezweigte Bypassgasstrom auf etwa 50 bis 100° C unter den Kondensationspunkt der auszuscheidenden flüchtigen Schadstoffe abgekühlt. Es ist somit eine bestmögliche Anpassung an verschiedenartige flüchtige Schadstoffe möglich, die in Abhängigkeit von den zur Verfügung stehenden Rohstoffen und Brennstoffen von Fall zu Fall einzeln oder gemeinsam und in unterschiedlichen Mengen auftreten können. Zu den flüchtigen Schadstoffen gehören vor allem Alkaliverbindungen sowie Schwefel-, Chlorid- und Fluoridverbindungen. Weiterhin können auch bei relativ niedrigen Temperaturen flüchtige Schwermetallverbindungen, deren Emission verhindert werden muss, mit der erfindungsgemässen Bypassmethode aus dem Gasstrom ausgeschieden werden. Hierfür kann der Bypass besonders günstig an das Steigrohr der Stufe des Schwebegasvorwärmers angeschlossen werden, durch welches der betreffende Schadstoffumlauf stattfindet.

Wird die erfindungsgemässe Bypassmethode zum Ausscheiden von Alkaliverbindungen verwendet, dann reicht eine Abkühlung des Teilgasstromes auf etwa 700° C, bei der die flüchtigen Alkalibestandteile (insbesondere KCl) zu einer trockenen pulvrigen Substanz kondensieren, die sich z.B. mittels eines Abscheiders leicht vom Teilgasstrom abtrennen läst.

In allen Fällen wird der Bypass praktisch überhaupt nicht mehr von staubförmigem Brenngut belastet. Es wird somit vermieden, dass sich die Kondensationsprodukte auf Staubteilchen niederschlagen und mit diesen klebrige Substanzen bilden können; vielmehr entsteht beim Abkühlen ein leicht von dem Teilgasstrom zu trennendes trockenes Kondensationsprodukt. Ein weiterer Vorteil

2

besteht darin, dass kein Brenngutstaub mehr verworfen werden muss. Aus dem Bypasssystem wird lediglich das unerwünschte Kondensationsprodukt abgeleitet.

Während bei den bekannten Bypassmethoden eine Abkühlung des Teilgasstromes auf eine für die Entstaubung geeignete Temperatur, die in der Regel unter 400° C liegt, erforderlich war, braucht bei Anwendung der erfindungsgemässen Bypassmethode nur auf eine solche Temperatur abgekühlt zu werden, bei der eine vollständige Kondensation stattgefunden hat. Beispielsweise liegt der Schmelzpunkt von Kaliumchlorid bei etwa 770° C. In der Praxis reicht für diesen Fall eine Abkühlung des Teilgasstromes auf etwa 700° C aus. Entsprechend hoch ist auch die Temperatur des vom Kondensationsprodukt befreiten Teilgasstromes, so dass dieser dem Schwebegasvorwärmer wieder zugeführt werden kann. Insbesondere bei einer Anlage mit einem mehrstufigen Schwebegasvorwärmer kann der Teilgasstrom an einer entsprechenden Temperaturstufe eingeleitet werden. Das in hoher Konzentration anfallende Kondensationsprodukt kann als chemischer Rohstoff weiterverarbeitet und genutzt werden.

Das neuartige Verfahren ermöglicht weiterhin durch Zugabe von Calciumchlorid zum Zementrohmehl eine erhöhte Ausscheidung von Alkalien, insbesondere von Kalium, und führt hierdurch zu einer verbesserten Qualität des Zementklinkers.

Die zur Durchführung des Verfahrens erforderliche Vorrichtung umfasst neben den üblichen Einrichtungen wie Drehrohrofen, Schwebegasvorwärmer und einem Bypass mit Kühleinrichtung und Abscheider eine einfache strömungstechnische Einrichtung. Hierfür ist eines der Steigrohre des Schwebegasvorwärmers mit einem den Rohrquerschnitt erweiternden diffusorartigen Rohrabschnitt versehen und der Bypass im Bereich der staubfreien Randzone dieses Rohrabschnittes oder einer in Strömungsrichtung unmittelbar dahinter liegenden Stelle angeschlossen. Die Anordnung des diffusorartigen Rohrabschnitts kann somit im Steigrohr aller Stufen des Schwebegasvorwärmers vorgesehen sein, wobei z.B. das Steigrohr der ersten Stufe das Verbindungsrohr zum Drehrohrofen darstellen kann.                     -

Ist eine Beschleunigung des Gasstromes im vorgesehenen Steigrohr erforderlich, dann wird dem diffusorartigen Rohrabschnitt eine den Rohrquerschnitt verengender düsenartiger Rohrabschnitt vorgeschaltet. Durch den düsenartigen Rohrabschnitt wird der Gasstrom einschliesslich der darin enthaltenen Staubteilchen beschleunigt. Im Diffusorteil werden die Staubteilchen wegen ihrer im Vergleich zu den sonstigen Gasbestandteilen höheren kinetischen Energie gebündelt durch den Diffusorteil bewegt, so dass dort an den Randzonen bzw. kurz hinter dem Diffusorteil ein von den Staubteilchen nicht beaufschlagter räumlicher Bereich gebildet wird, an den der Bypass angeschlossen wird. Die strömungstechnischen Einrichtungen können verschieden ausgebildet sein und lassen sich auch den baulichen Verhältnissen der Anlage leicht anpassen. So besteht die Möglichkeit einer venturiartigen Ausbildung durch Anordnung einer ringförmigen Blende am Innenmantel des Verbindungsrohres . Alternativ kann im Verbindungsrohr ein tropfenförmiger Strömungskörper angeordnet sein, an dessen in Strömungsrichtung spitz zulaufenden Flanken eine oder mehrere Öffnungen für den Anschluss des Bypasses angeordnet sind. Es besteht aber auch die Möglichkeit zur Anbringung anders ausgebildeter Stau- oder Blendkörper im Strömungsbett des Verbindungsrohres, insbesondere wenn dieses gekrümmt ist.

Der Gegenstand der Erfindung ist in der Zeichnung beispielsweise dargestellt. Es zeigen:

Fig. 1 eine Vorrichtung zur Herstellung von Zementklinker in einer schematisierten Darstellung,

Fig. 2 ein weiteres Ausführungsbeispiel, bei dem für den Bypass andere Anschlussstellen vorgesehen sind,

Fig. 3 einen Längsschnitt durch einen diffusorartigen Rohrabschnitt in einem Steigrohr,

Fig. 4 einen Längsschnitt durch einen venturiartigen Rohrabschnitt in einem Steigrohr, und

Fig. 5 eine andere Ausführung eines venturiartig ausgebildeten Rohrabschnitts.

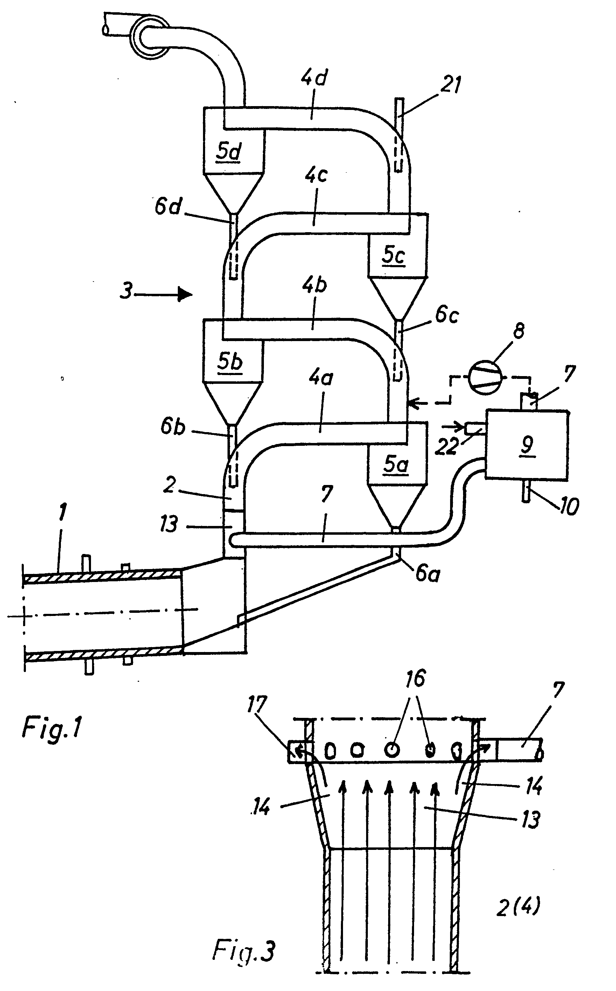

Die in Fig. 1 schematisch dargestellte Vorrichtung zur Herstellung von Zementklinker besteht im wesentlichen aus einem Drehrohrofen 1 und einem vierstufigen Schwebegasvorwärmer 3, bei dem jede Stufe von einem Steigrohr 4, einem Zyklon 5 und einem Fallrohr 6 gebildet wird. Die entsprechenden Teile der vier Stufen sind mit den Indizes a bis d versehen. Die Vorrichtung wird derart betrieben, das das Zementrohmehl durch das Aufgaberohr 21 in den Schwebegasvorwärmer 3 eingeführt wird. Es strömt durch dessen einzelne Stufen und wird dabei von dem heissen Gasstrom, der den Drehrohrofen 1 verlässt, vorgewärmt. In der unteren Stufe gelangt der heisse Gasstrom über das Steigrohr 4a in den Zyklon 5a. Das in dem Zyklon 5a abgeschiedene Material wird über das Fallrohr 6a in den Drehrohrofen 1 geschickt, wo es entgegen der Gasströmung durch den Ofen gefördert und dabei auf die für das Brennen des Zementklinkers erforderliche Brenntemperatur von etwa 1450° C erhitzt wird. Das den Drehrohrofen 1 verlassende Gas wird dabei mit Staubteilchen, die im Drehrohrofen 1 hochgewirbelt werden, angereichert und verlässt den Drehrohrofen mit etwa 1100° C.

Weiterhin ist der Vorrichtung ein Bypass 7 zugeordnet, der beim Ausführungsbeispiel nach Fig. 1 am unteren Ende des Steigrohres 4a, welches hier das Verbindungsrohr 2 zum Drehrohrofen 1 bildet, abzweigt und in das Steigrohr 4b mündet. Der Bypass 7 ist mit einem Gebläse 8, einem Abscheider 9 und einem Frischluftrohr 22 ausgerüstet. Das Ausführungsbeispiel nach Fig. 1 ist vor allem zur Ausscheidung von Alkalichloridverbindungen geeignet. Die im Zementrohmehl enthaltenen Alkaliverbindungen verdampfen bei Temperaturen über etwa 750 bis 800°C. Die verdampften Teile, zu denen neben Alkaliverbindungen auch Schwefel-, Chlorid- und Fluoridverbindungen gehören, werden von dem Gasstrom in die erste Stuffe des Schwebegasvorwärmers 3 geführt, wo sie nach entsprechender Abkühlung unter ihren Kondensationspunkt mit den Staubteilchen leicht klebende Substanzen bilden können, welche zu unerwünschten Ansätzen und Betriebsstörungen führen würden. Ausserdem wird das am Zementrohmehl niedergeschlagene Kondensationsprodukt erneut in den Drehrohofen 1 gefördert, womit bei erneuter Verdampfung ein sich aufschaukelnder Kreislauf der Alkaliverbindungen entsteht.

Der Verringerung des Gehaltes an flüchtigen Alkaliverbindungen und somit des Alkaligehalts im Zementklinker dient der Bypass 7, durch den ein Teilgasstrom abgeführt wird. Dieser Teilgasstrom wird mittels eines Gebläses 8 gefördert, wobei über ein Frischluftrohr 22 Frischluft zur Abkühlung des Teilgasstromes zugeführt wird, so dass die flüchtigen Alkalibestandteile und andere flüchtige Bestandteile kondensieren. Die Kondensationsprodukte werden in einem Abscheider 9 abgetrennt und über ein Entnahmerohr 10 abgeführt. Das von Kondensationsprodukten befreite Gas wird bei der Ausführung nach Fig. 1 zur Wärmeausnutzung in die zweite Stufe des Schwebegasvorwärmers 3 geleitet.

Erfindungsgemäss ist in dem Steigrohr 4a bzw. Verbindungsrohr 2 ein diffusorartig ausgebildeter Rohrabschnitt 13 angeordnet, wie er beispielsweise in den Fig. 3 bis 5 dargestellt ist. Das den Drehrohofen verlassende heisse und mit Staubteilchen angereicherte Gas strömt mit einer relativ hohen Geschwindigkeit von beispielsweise 15 m/s von unten nach oben. Die Staubteilchen durchströmen den diffusorartigen Rohrabschnitt 13 infolge ihrer hohen kinetischen Energie gebündelt, d.h. relativ zentrisch, so dass eine im wesentlichen von Staubteilchen freie Randzone 14 verbleibt. Im Bereich dieser staubfreien Randzone 14 bzw. in der unmittelbar daran anschliessenden, staubfreien Zone sind Öffnungen 16 vorgesehen, die über eine Ringleitung 17 an den Bypass 7 anschliessen.

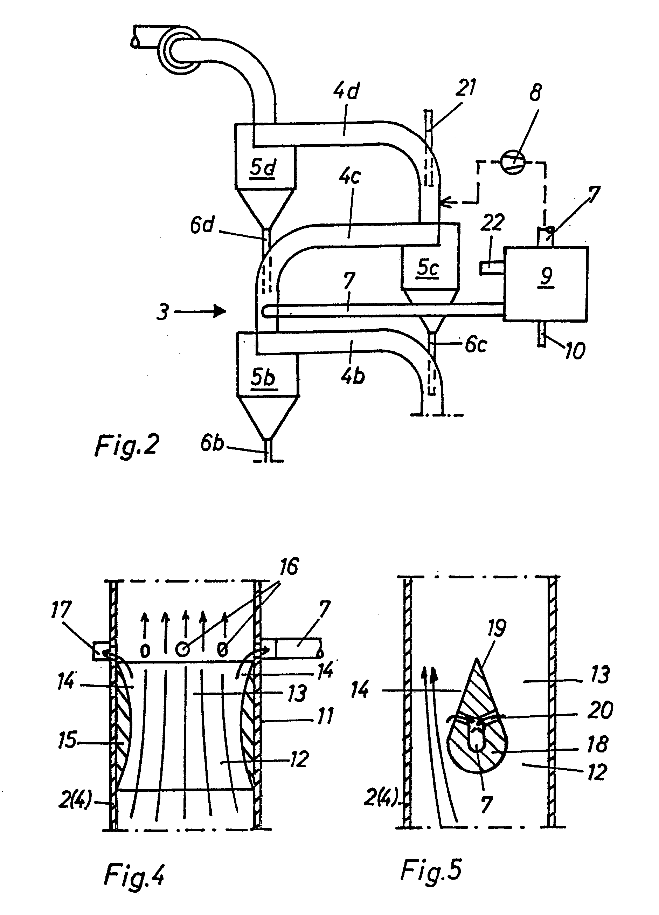

Liegt die Geschwindigkeit des den Drehrohofen verlassenden Gasstromes so niedrig, dass im Diffusorteil keine ausreichende Bündelung der Staubteilchen erreicht wird, dann lässt sich der Gasstrom zuvor durch den Einbau eines düsenartigen Rohrabschnitts 12 beschleunigen, wie es beispielsweise Fig. 4 zeigt. Bei dieser Ausführung ist ein venturiartig ausgebildeter Rohrabschnitt 11 vorgesehen, der aus einem sich verengenden, düsenartigen Rohrabschnitt 12 und einem sich erweiternden diffusorartigen Rohrabschnitt 13 besteht. Gebildet werden diese beiden Rohrabschnitte 12, 13 beim Ausführungsbeispiel nach Fig. 4 durch eine ringförmige Blende 15. Der von unten nach oben gerichtete Gasstrom wird durch den düsenartigen Rohrabschnitt 12 beschleunigt. Die dabei ebenfalls beschleunigten Staubteilchen strömen dann infolge ihrer höheren kinetischen Energie durch den diffusorartigen Rohrabschnitt 13 gebündelt, so dass die Randzone 14 im diffusorartigen Rohrabschnitt 13 bzw. unmittelbar dahinter praktisch nicht von Staubteilchen beaufschlagt wird. In diesem Bereich, d.h. der staubfreien Randzone 14, befinden sich die Öffnungen 16, die über eine Ringleitung 17 an den Bypass 7 anschliessen.

Die diffusorartigen bzw. düsenartigen Rohrabschnitte 13, 15 können beispielsweise durch feuerfeste Baumaterialien gebildet werden, die ohnehin in der Regel zur Innenauskleidung des Verbindungsrohres 2 bzw. der Steigleitungen 4a bis 4d Verwendung finden. Die diffusorartigen und düsenartigen Rohrabschnitte 13, 15 haben einen dem betreffenden Steigrohr 4a bis 4d bzw. Verbindungsrohr 2 angepassten Querschnitt, der in der Regel rechteckig ist, aber auch kreisförmig sein kann. Eine rotationssymmetrische Ausbildung ist nicht erforderlich.

Bei dem in Fig. 5 dargestellten Ausführungsbeispiel ist anstelle einer ringförmigen Blende 15 ein tropfenförmiger Strömungskörper 18 axial im Verbindungsrohr 2 bzw. Steigrohr 4a angeordnet. Auch hier wird ein düsenartiger Rohrabschnitt 12 und ein diffusorartiger Rohrabschnitt 13 gebildet. In dem sich erweiternden Rohrabschnitt 13 laufen die Flanken 19 in Strömungsrichtung spitz zu; an diesen Flanken 19 sind eine oder mehrere Öffnungen 20 für den Anschluss des Bypasses 7 angeordnet. Der tropfenförmige Strömungskörper 18 kann aus feuerfesten Baustoffen gefertigt sein. Die Anschlussleitung für den Bypass 7 verläuft rechtwinklig zur Strömungsachse.

Während mit der in Fig. 1 gezeigten Anordnung des Bypasses 7, der mit einem der in den Fig. 3 bis 5 dargestellten diffusorartigen und ggf. düsenartigen Rohrabschnitt 13 bzw. 15 ausgerüstet ist, vor allem eine Ausscheidung von Alkalichloridverbindungen erzielt wird, kann der Anschluss des Bypasses 7 zur Ausscheidung flüchtiger Schadstoffe mit niedrigeren Kondensationstemperaturen auch an entsprechenden Stellen des Schwebegasvorwärmers 3 erfolgen. In Fig. 2 ist beispielsweise der Bypass 7 an das mit einem diffusorartigen und bedarfsweise düsenartigen Rohrabschnitt 13 bzw. 15 ausgestaltete Steigrohr 4c angeschlossen. Diese Anordnung ist zur Ausscheidung solcher flüchtiger Schadstoffe geeignet, die bei der im Steigrohr 4c herrschenden Temperatur verdampft sind und durch Abkühlung auf eine Temperatur, die nicht unter der im Steigrohr 4d herrschenden Temperatur liegt, kondensiert. Zu flüchtigen Schadstoffen dieser Art gehören auch verschiedene Schwermetallverbindungen, die zwecks Verhinderung eines Auswurfes mit dem Abgas mittels der Bypassmethode ausgeschieden werden.

In Anpassung an die Eigenschaften der flüchtigen Schadstoffe kann der diffusorartige und bedarfsweise düsenartige Rohrabschnitt 13 bzw. 15 mit zugeordnetem Bypass 7 auch in dem anderen Steigrohr 4b oder 4d angeordnet sein. Die Einmündung des Bypasses 7 kann anstatt an der folgenden Stufe des Schwebegasvorwärmers 3 auch an der übernächsten Stufe od. dgl. erfolgen.

**Patentansprüche**

1. Verfahren zur Herstellung von Zementklinker aus Zementrohmehl, welches in einem mehrstufigen Schwebegasvorwärmer vom Gasstrom eines Drehrohrofens vorgewärmt und anschliessend durch den Drehrohrofen geführt wird, wobei zur Verringerung unerwünschter, in Brenn- und/oder Vorwärmstufen umlaufender flüchtiger Schadstoffe ein Teil des Gasstromes über einen Bypass geführt, bis zur Kondensation der darin enthaltenen flüchtigen Schadstoffe abgekühlt und nach Abscheidung der Kondensationsprodukte in den Schwebegasvorwärmer geleitet wird, dadurch gekennzeichnet, dass der mit den flüchtigen Schadstoffen und mit Brenngutstaub angereicherte Gasstrom des Drehrohrofens (1) oder einer Stufe des Schwebegasvorwärmers durch einen diffusorartig ausgebildeten Rohrabschnitt (13) derart geführt wird, dass die Staubteilchen den sich erweiternden Rohrabschnitt (13) gebündelt durchströmen und eine von Staubteilchen freie Randzone (14) gebildet wird, an welcher der Bypassgasstrom abgezweigt wird.

2. Verfahren nach Anspruch 1, dadurch gekennzeichnet, das der Gasstrom vor dem Einströmen in den diffusorartigen Rohrabschnitt (13) durch einen düsenartigen Rohrabschnitt (12) geführt und beschleunigt wird.

3. Verfahren nach einem der Ansprüche 1 oder 2, dadurch gekennzeichnet, dass der abgezweigte Bypassgasstrom auf etwa 50 bis 100°C unter den Kondensationspunkt der auszuscheidenden flüchtigen Schadstoffe abgekühlt wird.

4. Vorrichtung zur Durchführung des Verfahrens nach einem der Ansprüche 1 bis 3, bestehend aus einem Drehrohrofen (1), dessen Gasstrom in einen Schwebegasvorwärmer (3) gelenkt wird, und einem Bypass (7), der, von dem Gasstrom abgezweigt, mit einer Kühleinrichtung und einem Abscheider (9) ausgerüstet ist und in den Schwebegasvorwärmer (3) einmündet, dadurch gekennzeichnet, dass eines der Steigrohre (4a bis 4d) des Schwebegasvorwärmers mit einem den Rohrquerschnitt erweiternden diffusorartigen Rohrabschnitt (13) versehen ist und der Bypass (7) im Bereich der staubfreien Randzone (14) dieses Rohrabschnittes (13) oder einer in Strömungsrichtung unmittelbar dahinter liegenden Stelle angeschlossen ist.

5. Vorrichtung nach Anspruch 4, dadurch gekennzeichnet, dass dem diffusorartigen Rohrabschnitt (13) ein den Rohrquerschnitt verengender düsenartiger Rohrabschnitt (12) vorgeschaltet ist.

6. Vorrichtung nach Anspruch 5, dadurch gekennzeichnet, dass am Innenmantel des Steigrohres (4a bis 4d) eine ringförmige Blende (15) angeordnet ist.

7. Vorrichtung nach Anspruch 5, dadurch gekennzeichnet, dass im Steigrohr (4a bis 4d) ein tropfenförmiger Strömungskörper (18) angeordnet ist, an dessen in Strömungsrichtung spitz zulaufenden Flanken (19) eine oder mehrere Öffnungen (20) für den Anschluss des Bypasses (7) angeordnet sind.

## Claims

1. A process for the preparation of cement clinker from raw cement powder which is preheated in a multistage suspension preheater by the gas flow of a rotary kiln, then goes therethrough, some of the gas flow being bypassed, in order to reduce unwanted detrimental impurities circulating in the heating and/or preheating stages, through a bypass, being cooled until condensation of the volatile impurities in it and, after separation of the condensation products, entering the suspension preheater, characterised in that the gas flow of the rotary kiln (1) or of a stage of the suspension preheater, which flow carries the volatile impurities and combustible material in dust form, is so passed through a diffuser-like tubular portion (13) that the dust particles flow in bunched fashion through the widening tube portion (13), a dust-free edge zone (14) being formed from which the bypass gas flow is branched off.

2. A process according to Claim 1, characterised in that before entering the diffuser-like tubular portion (13) the gas flow goes through and is accelerated by a nozzle-like tubular portion (12).

3. A process according to Claim 1 or 2, characterised in that the branched-off bypass gas flow is cooled to approximately 50 to 100°C below the condensation point of the volatile impurities it is required to separate out.

4. An apparatus for the practice of the process according to any of Claims 1 to 3, comprising a rotary kiln (1) whose gas flow is deflected into a suspension preheater (3), and a bypass (7), which branches off from the gas flow, has cooling means and a separator (9) and extends into the suspension preheater (3), characterised in that one of the suspension heater risers (4a to 4d) has a diffuser-like tubular portion (13) which widens the tube cross-section and in that the bypass (7) is connected either near the dust-free edge zone (14) of the tubular portion (13) or at a place immediately thereafter as considered in the flow direction.

5. An apparatus according to Claim 4, characterised in that a nozzle-like tubular portion (12) which narrows the tube cross-section precedes the diffuser-like tubular portion (13).

6. An apparatus according to Claim 5, characterised in that an annular restrictor (15) is disposed on the inside generated surface of the riser (4a to 4d).

7. An apparatus according to Claim 5, characterised in that a drop-shaped flow member (18) is disposed in the riser (4a to 4d) and its flanks (19) which converge at an acute angle in the flow direction are formed with one or more orifices (20) for the connection of the bypass (7).

## Revendications

1. Procédé de fabrication du clinker à partir de farine crue de ciment qui est préchauffée dans un dispositif de préchauffage à mise en suspension dans les gaz et à plusieurs étages par le courant de gaz d'un four tubulaire rotatif et qui est envoyée ensuite dans le four tubulaire rotatif, une partie du courant de gaz étant, en vue de diminuer les substances volatiles nuisibles, indésirables, circulant en circuit fermé dans les étages de calcination et/ou de préchauffage, envoyée par une dérivation, étant refroidie jusqu'à condensation des substances nuisibles volatiles qui y sont contenues et, après dépôt des produits de condensation, étant envoyée dans le dispositif de préchauffage à mise en suspension dans les gaz, caractérisé en ce qu'il consiste à envoyer le courant de gaz du four tubulaire rotatif (1) ou d'un étage du dispositif de préchauffage à mise en suspension dans les gaz, enrichi en substances nuisibles volatiles et en poussière de produit calciné, à un tronçon de conduit (13) agencé en diffuseur, de manière que les particules de poussière passent, en étant concentrées en un faisceau, dans le tronçon tubulaire (13) qui s'élargit et de manière qu'il se forme une zone marginale (14), exempte de particules de poussière, de laquelle le courant gazeux de dérivation est prélevé.

2. Procédé suivant la revendication 1, caractérisé en ce qu'il consiste à envoyer et à accélérer le courant gazeux, avant entrée dans le tronçon tubulaire (13) en forme de diffuseur, dans un tronçon tubulaire (12) en forme de buse.

3. Procédé suivant l'une des revendications 1 ou 2, caractérisé en ce qu'il consiste à refroidir le courant gazeux de dérivation qui est prélevé à une température inférieure de 50 à 100°C environ au point de condensation des substances nuisibles volatiles à séparer.

4. Installation pour la mise en œuvre du procédé suivant l'une des revendications 1 à 3, constituée d'un four tubulaire rotatif (1), dont le courant de gaz est dévié dans un dispositif de préchauffage (3) à mise en suspension dans les gaz, et d'une dérivation (7) qui part du courant gazeux, munie d'un dispositif de refroidissement et d'un séparateur (9), et qui débouche dans le dispositif de préchauffage (3) à mise en suspension dans les gaz, caractérisée en ce que l'un des conduits montants (4a à 4d) du dispositif de préchauffage à mise en suspension dans les gaz est muni d'un tronçon tubulaire (13) de type à diffuseur élargissant la section transversale du conduit et en ce que la dérivation (7) est raccordée dans la région de la zone marginale (14) exempte de poussière de ce tronçon de conduit (13) ou à un emplacement se trouvant immédiatement en aval suivant le sens d'écoulement.

5. Installation suivant la revendication 4, caractérisée en ce que, en amont du tronçon tubulaire (13) en forme de diffuseur, est monté un tronçon tubulaire (12) en forme de buse rétrécissant la section transversale du conduit.

6. Installation suivant la revendication 5, caractérisée en ce que, sur la paroi latérale intérieure du conduit montant (4a à 4d), est disposé un diaphragme (15) annulaire.

7. Installation suivant la revendication 5, caractérisée en ce que, dans le conduit montant (4a à 4d), est disposé un corps modifiant l'écoulement (18) en forme de gouttelette et en ce que, sur les flancs (19) de celui-ci qui pointent dans le sens de l'écoulement, sont disposées une ou plusieurs ouvertures (20) pour le raccordement de la dérivation (7).

Fig.1

Fig.3

*Fig.2*

*Fig.4*

*Fig.5*